Europäisches Patentamt

European Patent Office

Office européen des brevets

(11) Veröffentlichungsnummer: **0 221 048**
A2

# EUROPÄISCHE PATENTANMELDUNG

(21) Anmeldenummer: **86890292.5**

(51) Int. Cl.⁴: **B 01 D 3/16**

(22) Anmeldetag: **28.10.86**

(30) Priorität: **28.10.85 AT 3111/85**

(71) Anmelder: **Envirotec AG, Am schrägen Weg 2, FL-9490 Vaduz (LI)**

(43) Veröffentlichungstag der Anmeldung: **06.05.87 Patentblatt 87/19**

(72) Erfinder: **Schmid, Peter J., Neustiftgasse 93, A-1070 Wien (AT)**
Erfinder: **Kranebitter, Franz, Dr., Neustiftgasse 93, A-1070 Wien (AT)**
Erfinder: **Panning, Peter, Neustiftgasse 93, A-1070 Wien (AT)**

(84) Benannte Vertragsstaaten: **AT BE CH DE ES FR GB GR IT LI LU NL SE**

(74) Vertreter: **Kliment, Peter, Dipl.-Ing. Mag.-jur., Singerstrasse 8, A-1010 Wien (AT)**

(54) Steuerelement für Kolonne.

(57) Die zungeförmigen Ventile 1, 7 einer für Gas- und Dampfströmungen vorgesehenen Stoffaustauschkolonne zur Erzielung eines intensiven Phasenkontaktes zwischen Flüssigkeiten und Gasen ist unter Bildung zwei Schenkel 2, 3 winkelförmig ausgebildet. Durch diese Ausbildung können die Ventile 1, 7 unter Einwirkung des aufströmenden Gasdruckes unter lediglich geringem Druckverlust umgebogen werden, wobei in vorteilhafter Weise ein besonders großer Öffnungsquerschnitt gebildet wird.

Die Erfindung betrifft einen Ventilboden für Stoffaustauschkolonnen für Gas- und Dampfströmungen zur Erzielung eines intensiven Phasenkontaktes zwischen Flüssigkeiten und Gasen bzw.
Dämpfen für Gasreinigung, Destillation, Absorption, Extraktion
oder dergleichen mit verschwenkbaren Ventilen, welche zwei
winkelförmig zueinander angeordnete Schenkel aufweisen.

Bei chemischen Prozessen werden Phasenkontaktvorrichtungen in
mannigfaltigster Ausführung eingesetzt, um Flüssigkeiten und
Gase in direkten Kontakt treten zu lassen und dabei die verschiedenen Komponenten zur Reaktion zu bringen. Die aufwärtsströmenden Gase öffnen dabei die Ventile gegen den nach unten
gerichteten Flüssigkeitsstrom, wobei je nach Konstruktion diese
Ventile eine charakteristische Druckdifferenz zu überwinden
ist. Dabei soll der bei der Durchströmung der Ventile auftretende Druckverlust möglichst gering gehalten und ein möglichst
intensiver Phasenkontakt erreicht werden. Weiters soll zur
Erhöhung der Betriebssicherheit die Konstruktion einfach ausgeführt sein.

Keines der bekannten Systeme erfü llt alle diese Forderungen in
erstrebenswerter Weise. Insbesondere wird bei fast allen Systemen (siehe etwa US-PS 3 940 462) der Druckverlust vom Gewicht
der Ventile beeinflußt, die durch den Gasstrom angehoben werden
müssen, so daß der Druckverlust entsprechend hoch ist. Bei dem
durch ein Gegengewicht ausballancierten Ventilen wird die Behebung dieses Mangels lediglich mit aufwendigen Bewegungsmechanismen ermöglicht.

Es sind auch - gemäß DE-OS 2 412 918 - derartige Steuerelemente
bekannt, die als um ein Stützelement verschwenkbare Kippelemente nebeneinander aufgereiht sind. In der Ruhelage liegen diese
mit ihren freien Enden auf den auf dem benachbarten Stützelement drehbar gelagerten Kippelementen auf. Unter Einwirkung der
aufsteigenden Phase sind sämtliche Kippelemente um die Längsachse des Stützelementes bis zu einem mittig und oberhalb von
zwei benachbarten Stützelementen liegenden Anschlag aus der

Ruhelage verschwenkbar. Dabei sind die Kippelemente so aufgereiht, daß von den nebeneinander liegenden Kippelementen abwechselnd lediglich eine positive oder eine negative Winkeldrehung durchführbar ist. Derartige Kippelemente wirken mit
ihrem Gewicht zur Gänze gegen die aufsteigende Phasenströmung,
wodurch es zu einem deutlichen Druckverlust kommt. Außerdem ist
noch dazu ein Reibungswiderstand beim Verdrehen der Kippelemente um ihre Drehachse zu überwinden, der naturgemäß mit zunehmender Verschmutzung noch vergrößert wird.

Es ist auch noch - gemäß HU-PS 163 343 - bekannt, derartige
Steuerelemente so anzuordnen, daß diese in der Ruheposition in
der Ebene der Bodenfläche liegen und dabei eine entsprechende
Öffnung abdecken. Das lediglich einseitig, und zwar abwechselnd
auf der gegenüberliegenden Seite, mit der Bodenfläche verbundene Steuerelement wird durch den aufsteigenden
Strömungsdruck im Bereich des freien Endes von der Bodenfläche
abgehoben und gibt damit die Bodenöffnung frei. Auch bei dieser
bekannten Ausführung wirkt das gesamte Gewicht der Steuerelemente gegen den aufsteigenden Strömungsdruck.

Die Aufgabe der vorliegenden Erfindung liegt nun in der
Schaffung eines Ventilbodens der eingangs beschriebenen Art,
der unter Vermeidung der angeführten Nachteile in den bekannten
Ausführungen vor allem eine weitgehend druckverlustfreie
Durchströmung der gasförmigen Phase ermöglicht.

Diese Aufgabe wird erfindungsgemäß dadurch gelöst, daß die
Ventile aus eleastischem Material gebildet sind und über ihre
senkrechten Schenkel direkt mit rasterförmigen Halterungen
verbunden sind, wobei die in Ruheposition der Ventile horizontalen Schenkel zur Bildung des Ventilbodens aneinandergrenzend
angeordnet sind.

Mit einer derartigen Ausbildung der Ventile wird in besonders
vorteilhafter Weise erreicht, daß der auf dem zweiten, etwa
horizontalen Schenkel einwirkenden Druck des aufströmenden
Gases in ein Drehmoment zum Verbiegen des ersten, vertikalen

Schenkels umgeformt wird. Dabei ist die relativ weite Entfernung des freien Endes des zweiten Schenkels von der Einspannstelle des Ventiles und die dadurch gebildete große Hebelwirkung sehr vorteilhaft, so daß die für die Öffnung der Ventile erforderliche Kraft und damit auch der Druckverlust des aufströmenden Gases auf ein Minimum reduziert ist. Als weiterer Vorteil ist noch die relativ große Kontaktfläche zu erwähnen wodurch die Komponentenübertragung und die sich zwischen den einzelnen Phasen ereignenden Reaktionen weitgehend begünstigt werden. Auch der Öffnungsquerschnitt ist durch die erfindungsgemäße Ausbildung der Ventile in vorteilhafter Weise besonders groß.

Der horizontale Schenkel des Ventiles kann gemäß einer vorteilhaften Ausführungsform der Erfindung in seiner Ruheposition mit seinem freien Ende das angrenzende Ventil im Bereich dessen horizontalen Schenkels teilweise überlappen. Mit einer derartigen Überlappung ist eine zuverlässige Umlenkung der aufströmenden Gasphase erzielbar.

Gemäß einer weiteren bevorzugten Ausführungsform der Erfindung ist vorgesehen, daß menrere in der Ebene des vertikalen Schenkels nintereinander angeordnete Ventile zur Bildung von mehreren parallel zueinander verlaufenden, nebeneinander liegenden Ventilreihen vorgesehen sind, wobei die horizontalen Schenkel aller Ventile der einen Ventilreihe in der einen und die horizontalen Schenkel aller Ventile der benachbarten Reihe in der anderen Richtung umgebogen sind. Durch diese in Bezug auf die einzelnen Ventilreihen abweichende Biegung der zweiten Schenkel der Ventile in der einen bzw. anderen Richtung ist ein besonders hohes Maß an Turbulenzen für ein optimales Vermischen der einzelnen Phasen erzielbar.

Im folgenden wird die Erfindung an Hand von in der Zeichnung dargestellten Ausführungsbeispielen näher beschrieben. Es zeigen:

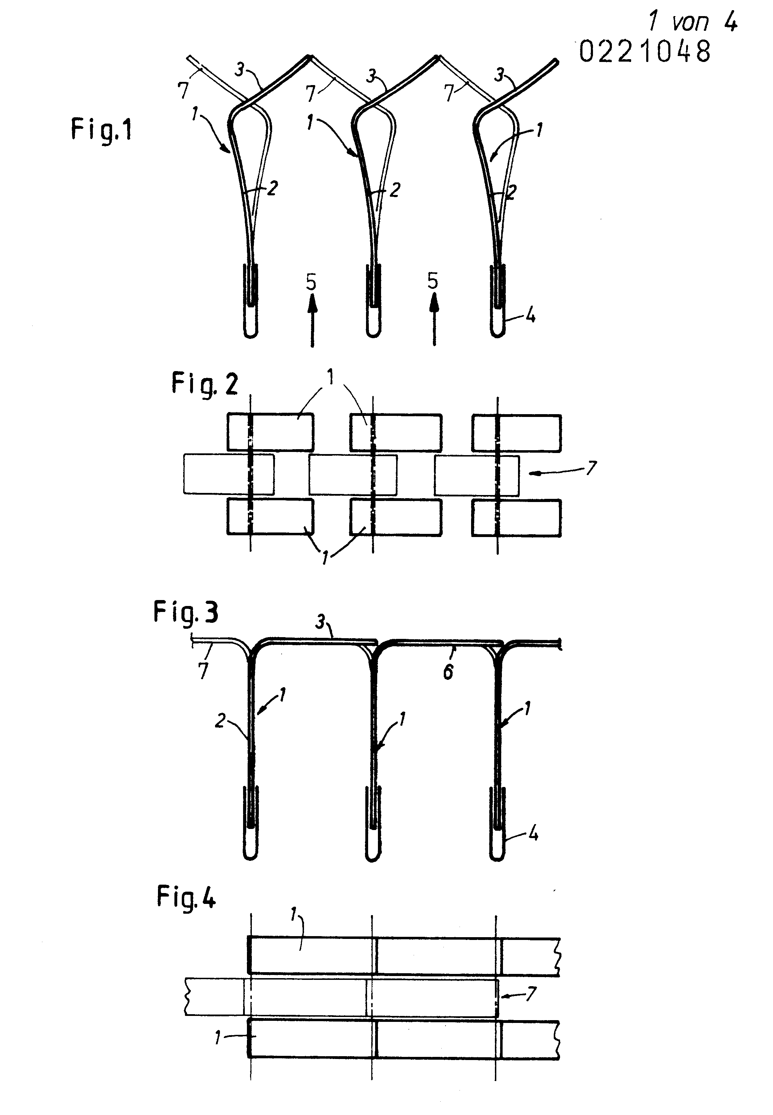

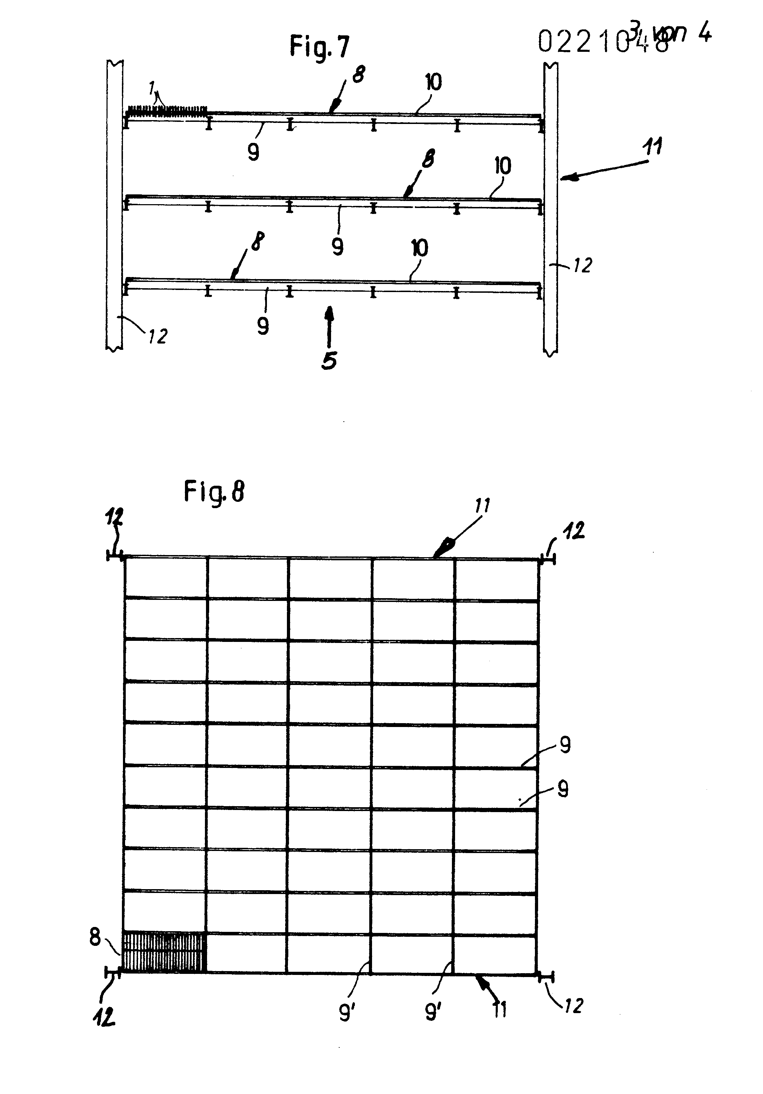

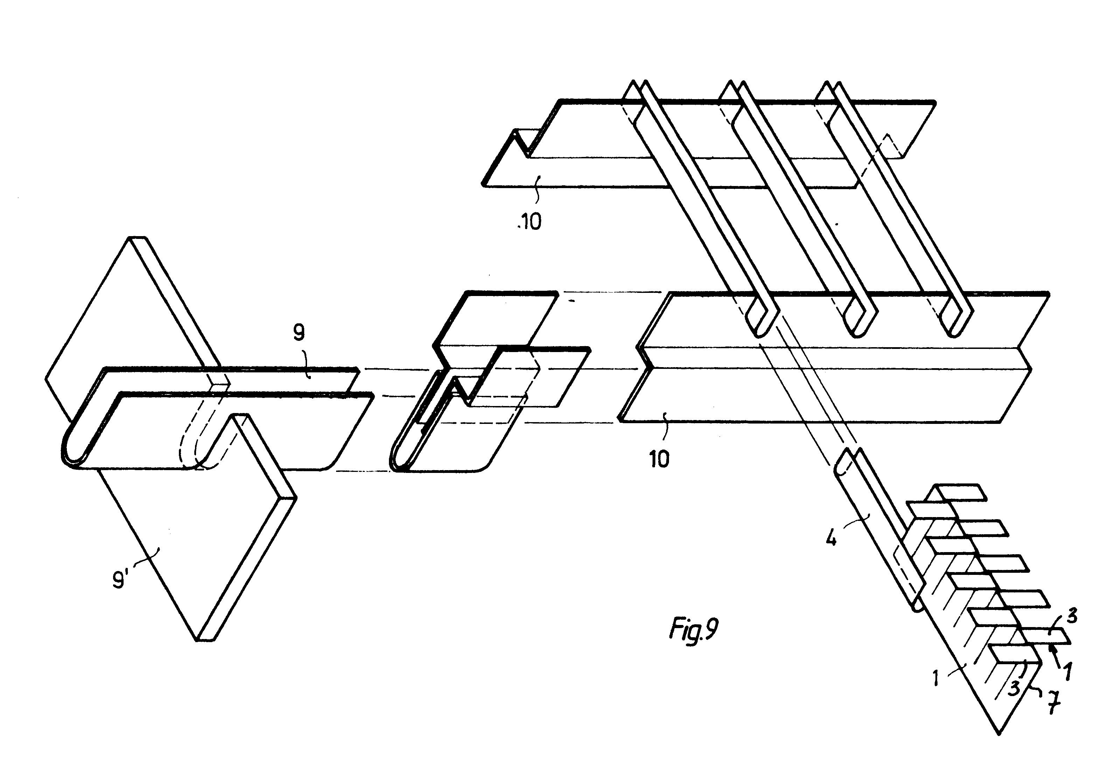

Fig. 1 eine Seitenansicht von Ventilen gemäß der Erfindung in geöffneter Position; Fig. 2 eine Draufsicht auf die Ventile gemäß Figur 1; Fig. 3 eine Seitenansicht der Ventile in Ruheposition; Fig. 4 eine Draufsicht auf die Ventile nach Figur 3; Fig. 5 und 6 Details des Ventilbodens und der Anordnung der Ventile; Fig. 7 und 8 schematische Übersichtsdarstellungen einer Stoffaustauschkolonne und Fig. 9 eine Perspektivansicht einer zur Fixierung der Ventile vorgesehenen Bodenfläche.

Die in den Figuren 1 bis 4 ersichtlichen als Winkelprofil ausgebildeten Ventile 1, 7 für Gas- und Dampfströmungen weisen zwei im Winkel zueinander angeordnete Schenkel 2 und 3 auf, von denen der Schenkel 2 in Ruheposition gemäß Figur 3 vertikal angeordnet und mit seinem unteren, freien Ende in einem U-Profil 4 einer später noch näher zu beschreibenden Bodenfläche festgeklemmt ist. Das in Richtung von Pfeilen 5 aufströmende Gas übt auf die Unterseite 6 des zweiten, horizontal angeordneten Schenkels 3 einen Druck aus, der teilweise in ein Drehmoment zum Verdrängen und Hochbiegen des Ventiles umgeformt wird. Wie in Figur 1 ersichtlich, kommt es dabei zu Bildung eines relativ großen Öffnungsquerschnittes, wobei die gasförmige Phase im oberen Bereich stark umgelenkt wird, wodurch eine große Turbulenz und eine innige Berührung der beiden Phasen zustande kommt.

In Figur 2 ist die Anordnung der in Verankerungsrichtung benachbarten Ventile erkennbar, wobei diese benachbarten Ventile in entgegengesetzten Richtungen durch die Gasströmung ausgelenkt werden.

Die in Figur 3 in Ruheposition dargestellten Ventile 1, 7 berühren einander im Bereich des freien Endes des zweiten, horizontalen Schenkels 3 bzw. im Winkelbereich.

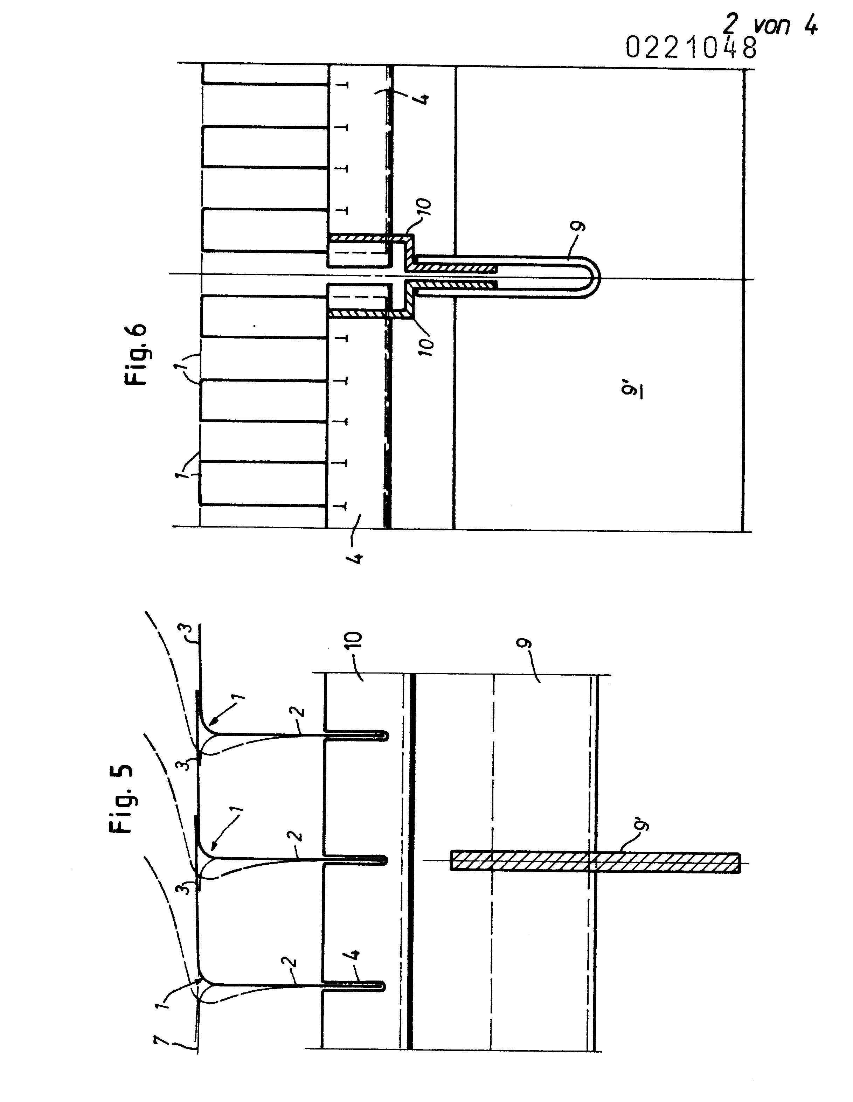

Aus den Fig. 5 bis 9 ist die Anordnung der aus erfindungsgemäßen Ventilen zusammengesetzten Steuervorrichtung in einer Stoffaustauschkolonne 11 dargestellt. Die Stoffaustauschkolonne 11 weist vier vertikale Hauptstützen 12 auf. An diesen Hauptstützen 12 sind mehrere horizontal und im Abstand zueinander angeordnete Bodenflächen 8 verankert. Die Bodenfläche 8 wird aus ein U-Profil aufweisenden Trägern 9 und quer dazu verlaufenden Holmen 9' gebildet. Die Holme 9' werden von Trägern 11 getragen, die, wie aus Fig. 8 ersichtlich ist, über die gesamte Breite der Stoffaustauschkolonne 11 verlaufen. In den Träger 9 sind Winkelprofile 10 eingesetzt, welche im Abstand voneinander angeordnete Ausnehmungen zur Aufnahme von U-Profilelementen 4 aufweisen. In diese U-Profilelemente 4 werden die Ventile 1, 7 mit dem vertikalen Schenkel 2 festgeklemmt, wobei die horizontalen Schenkel 3 abwechselnd in entgegengesetzten Richtungen ausgerichtet sind.

Die Ventile 1, 7 sind aus Metall oder Kunststoff hergestellt. Vorzugsweise bestehen sie aus rostfreien Federstahlblech. Die Stärke der Steuerelemente liegt im Bereich zwischen 0,05 und 0,25 mm. Ein bevorzugter Bereich ist 0,08 bis 0,1 mm. Die Breite der Steuerelemente liegt im Bereich von 3 bis 20 mm, vorzugsweise 8 bis 12 mm.

# PATENTANSPRÜCHE

1. Ventilboden für Stoffaustauschkolonnen für Gas- und Dampfströmungen zur Erzielung eines intensiven Phasenkontaktes
zwischen Flüssigkeiten und Gasen bzw. Dämpfen für Gasreinigung,
Destillation, Absorption, Extraktion oder dergleichen mit verschwenkbaren Ventilen, welche zwei winkelförmig zueinander
angeordnete Schenkel aufweisen, dadurch gekennzeichnet, daß die
Ventile (1) aus eleastischem Material gebildet sind und über
ihre senkrechten Schenkel (2) direkt mit rasterförmigen Halterungen (4) verbunden sind, wobei die in Ruheposition der Ventile (1) horizontalen Schenkel (3) zur Bildung des Ventilbodens
aneinandergrenzend angeordnet sind.

2. Ventilboden nach Anspruch 1, dadurch gekennzeichnet, daß der
horizontale Schenkel (3) des Ventiles (1) in seiner Ruheposition mit seinem freien Ende das angrenzende Ventil (1) im
Bereich dessen horizontalen Schenkels teilweise überlappt.

3. Ventilboden nach einem der Ansprüche 1 oder 2, dadurch
gekennzeichnet, daß mehrere in in der Ebene des senkrechten
Schenkels (2) hintereinander angeordnete Ventile (1, 7) zur
Bildung von mehreren parallel zueinander verlaufenden, nebeneinander liegenden Ventilreihen (1, 7) vorgesehen sind, wobei die
horizontalen Schenkel (3) aller Ventile (1) der einen Ventilreihe in der einen und die horizontalen Schenkel (3) aller
Ventile (7) der benachbarten Reihe in der anderen Richtung
umgebogen sind.

4. Ventilboden nach einem der Ansprüche 1 bis 3, dadurch gekennzeichnet, daß wenigstens zwei durch die horizontalen Schenkel (3) der Ventile (1) gebildete Ventilböden übereinander
angeordnet sind.

5. Ventilboden nach einem der Ansprüche 1 bis 4, dadurch ge-

kennzeichnet, daß das Ventil (1, 7) aus Federstahlblech besteht und eine Stärke von 0,05 bis 0,25 mm, vorzugsweise 0,08 bis 0,1 mm aufweist.

6. Ventilboden nach einem der Ansprüche 1 bis 5, dadurch gekennzeichnet, daß die beiden Schenkel (2, 3) der Ventile (1) eine Breite von 3 bis 20 mm, vorzugsweise 8 bis 12 mm, aufweisen.

Fig.1

Fig.2

Fig.3

Fig.4

# Fig. 5

# Fig. 6

Fig. 7

0221048    3 von 4

Fig. 8

Fig.9